# EUROPEAN PATENT SPECIFICATION

(11) **EP 4 522 937 B1**
(45) Date of publication and mention of the grant of the patent: **18.11.2026**
(21) Application number: 23724182.3
(22) Date of filing: 10.05.2023
(51) Int. Cl.: G01B 11/02, G01B 11/06, B21D 39/06, B21D 53/02

(54) **METHOD OF DETERMINING A WALL THICKNESS REDUCTION, %WR OF PIPES FIXED IN PIPE SHEET HOLES, SYSTEM THEREFORE AND USE OF THE METHOD**
VERFAHREN ZUR BESTIMMUNG EINER WANDDICKENREDUKTION, DES GEHALTS AN IN ROHRPLATTENLÖCHERN FIXIERTEN ROHREN, SYSTEM DAFÜR UND VERWENDUNG DES VERFAHRENS
PROCÉDÉ DE DÉTERMINATION D'UNE RÉDUCTION D'ÉPAISSEUR DE PAROI, DE TUYAUX FIXÉS DANS DES TROUS DE PLAQUES DE TUYAU, SYSTÈME ASSOCIÉ ET UTILISATION DU PROCÉDÉ

(30) Priority: 12.05.2022 DK PA202270254
(43) Date of publication of application: 19.03.2025
(73) Proprietor: Vestas Aircoil A/S, 6940 Lem St. (DK)
(72) Inventor: NIELSEN, Frank, 6940 Lem (DK); IBSEN, Claus, 6940 Lem (DK)
(74) Representative: Patrade A/S
(86) International application number: PCT/DK2023/050114
(87) International publication number: WO 2023/217339

(56) References cited:
- JP-A- S6 082 910
- US-A1- 2012 249 778

## Description

### Field of the Invention

The present invention relates to a method of determining a wall thickness reduction, %WR of a pipe fixed in a pipe sheet hole in a pipe sheet by expansion.

The method comprises an act of receiving initial inner diameter of pipe before expansion, outer diameter of pipe before expansion, inner diameter of pipe sheet hole and final inner diameter of the pipe after expansion, and an act of determining the wall thickness reduction, %WR of the pipe based on the received diameters.

The invention furthermore relates to an imaging system for performing the method and a use of the method.

### Background of the Invention

It is known to mount and fix pipes in pipe sheets by expansion of the pipes after positioning the pipes in holes in the pipe sheet. This technique is applied during the production of a wide range of devices for obtaining sufficient tightness between a pipe penetrating a plate, particularly in applications where it is desirable to have for example a liquid on one side of the plate and air or other liquid/media on the other side of the plate. Leaking in the connection between the pipe and the plate is undesirable.

Techniques for assembling such parts by expansion of the pipes are used in particular in heat exchangers and steam generators employed in the oil industry, the chemical industry, the production of gas, energy, in the metallurgical industry and in the construction of ships, including marine atomic energy installations, nuclear power plants and related industries.

Commonly used expansion processes include a mandrel i.e. a tool with rollers acting on the pipes from within and controlling the expansion of the pipes through a predetermined parameter of the motor torque transmitted to the mandrel. The parts included in this process includes various variations such as pipe wall thickness, diameter of the pipes and of the holes in the pipe sheets, and individual characteristics of each mandrel assembly including general wear of the mandrel.

JPS55161532 A discloses an automatic tube expanding device with a tube expander unit, a thrust moving device for moving the unit and a control device for controlling the operation of the unit and thrust moving device, wherein a wall thickness reduction during the tube expansion is based on the tube expansion torque.

The assembly is typically leak-tested afterwards testing each pipe assembly individually.

However, this leakage-test does not test the quality of the pipe after expansion. For obtaining a good quality of the device with the pipes fixed in the pipe sheet, the pipes must undergo a plastic deformation during the expansion while the plate sheets should only be exposed to an elastic deformation, thereby regaining the original hole size after the expansion process while the pipes should maintain the deformation after the expansion process. Furthermore, the plastic deformation of the pipes must be kept below the critical point of breakage.

Furthermore, it is very cumbersome and impractical to test and repair such connections.

JP S 60 82910 A discloses an apparatus for determining a wall thickness reduction of a pipe using an ultrasound thickness gauge.

Therefore, a method of verifying the assembly of the pipes in the pipe holes is disclosed to verify the quality of the assembly.

### Object of the Invention

Consequently, it is an object of the present invention to provide a method of determining a wall thickness reduction, %WR of a pipe fixed in a pipe sheet hole (4) in a pipe sheet by expansion.

One objective is to achieve a method which is easy to use, easy to apply, and may be applied in a very quick and safe manner for quality control of the assembled pipes penetrating the pipe sheets.

It is a further objective to achieve a system for implementing the method.

### Description of the Invention

The invention addresses these objectives by providing a method of determining a wall thickness reduction, %WR of a pipe fixed in a pipe sheet hole in a pipe sheet by expansion.

The method comprises an act of receiving:
- an initial inner diameter of pipe before expansion, d_i,
- an outer diameter of pipe before expansion, d_o,
- an inner diameter of pipe sheet hole, D_i, and
- a final inner diameter of the pipe after expansion, d_ia.

The method furthermore includes an act of determining the wall thickness reduction, %WR of the pipe based on the received diameters d_i, d_o, D_i and d_ia.

Particularly, for heat exchangers or large cooling installations a large number of pipes fixed as through-going pipes in end plates are necessary in order to provide sufficient heat exchange areas in a heat exchanger. In these constructions, the pipes will typically be very close to each other and as such, there is not much space to operate on.

The leakage-tests typically applied after the assembly only indicate whether the seal is tight or not. However, the quality of the seal and the pipe after assembly is not indicated by these tests.

By determining a wall reduction, %WR of the pipes after assembly the quality of the device with the pipes fixed in the pipe sheet can be controlled. In this type of devices, the seal is achieved by exposing the pipes to a plastic deformation during the expansion while the plate sheets should only be exposed to an elastic deformation, thereby regaining the original hole size after the expansion process, while the pipes maintain the deformation after the expansion process. Furthermore, the plastic deformation of the pipes must be kept below the critical point of breakage, to maintain the durability of the pipes according to the intended use i.e. exposure to pressure.

Due to the wall thickness reduction caused by the expansion of the pipe, the pipe material will extend along a longitudinal axis of the pipe.

Using only the final inner diameter of the pipe, d_ia as the only parameter of the assembled part after expansion of the pipe, a reliable method for determining the wall thickness reduction is achieved. Expansion of the pipe to the extend where a plastic deformation of the pipe is achieved while only an elastic deformation of the sheet plate is reached results in yield of the pipe material to extend beyond the sheet hole, i.e. after expansion, pipe material may bulge over the edge of the pipe sheet hole and thus covers the edge of the sheet hole, thereby preventing determining or measuring the inner diameter of the pipe sheet hole and the outer diameter of the pipe after expansion.

In a further embodiment of the method, the wall thickness reduction, %WR of the pipe after expansion is determined by: $%WR = 100 ⋅ \frac{\frac{1}{2} \left({d}_{ia}-{d}_{i}\right) - \frac{1}{2} \left({D}_{i}-{d}_{o}\right)}{\frac{1}{2} \left({d}_{o}-{d}_{i}\right)} .$

This can also be expressed as $%WR = \frac{Δ R - c}{t}$, where:
Δ*R* is the change in inside radius of the pipe before and after expansion,
*c* is the clearance between the pipe and pipe sheet before expansion, and
*t* is the pipe thickness before expansion.

In a further embodiment of the method, the received diameters d_i, d_o, D_i and d_ia are estimated based on detection of multiple points connected to the initial inner diameter of pipe before expansion d_i and/or the outer diameter of pipe before expansion d_o, the inner diameter of pipe sheet hole D_i, and the final inner diameter of the pipe after expansion d_ia, respectively.

The diameters may be estimated by a suitable form of triangulation, curve-fitting or other mathematical modelling based on recognizable features associated with one or more of the pipes diameters and the pipe sheet hole diameter.

The estimates may be achieved by applying computer modelling, machine learning or other computer implemented calculations or estimates.

The machine learning may be implemented by use of SVM, KNN, rCNN or similar methods.

Extreme care must however be taken for obtaining reliable estimates of the diameters.

In a further embodiment, the method includes using an imaging device arranged externally to the pipe sheet with an optical axis of the imaging device being aligned approximately parallel to a longitudinal axis of the pipe sheet hole(s), wherein the method comprises an act of capturing a first image of the pipe sheet with the pipe(s) inserted in the pipe sheet hole(s) before expansion, and from the first image determining:
- the initial inner diameter of pipe before expansion, d_i,
- the outer diameter of pipe before expansion, d_o, and
- the inner diameter of pipe sheet hole, D_i,
and a further act of capturing a second image of the pipe sheet with the pipe(s) inserted in the pipe sheet hole(s) after expansion, and from the second image determining the final inner diameter of the pipe after expansion, d_ia.

One effect of using an imaging device external to the sheet and hence the pipes may be beneficial in obtaining an efficient method where only a single image is required for determining the wall thickness reduction %WR of multiple pipes. This may lead to an fast verification of the assembled parts.

In addition, the captured images may be stored and saved for later quality verification.

In a further embodiment of the method, the diameters d_i, d_o, D_i and d_ia may be determined using image analysis.

In a further aspect of the method which includes using an imaging device, the image device is an optical imaging device, and the captured images are optical images.

The objectives of the invention may be achieved by a system for determining the wall thickness reduction %WR of the pipe fixed in the pipe sheet hole by expansion.

The system may comprise an imaging device configured to be arranged externally to the pipe sheet with an optical axis of the imaging device being aligned approximately parallel to a longitudinal axis of the pipe and configured for capturing images.

The system may furthermore comprise a processor configured for receiving the captured images and for performing image analysis on the captured images for determining a diameter of an item comprised in the captured image and means adapted to execute the acts of the disclosed method according to any one or more of the embodiments for determining the wall thickness reduction, %WR.

The effect and benefits achieved with such a system are in line with those already described in connection with the different embodiments of the method. Hence, the system supports implementing and effecting the method of determining the wall thickness reduction, %WR.

The object of the invention may furthermore be achieved by computer program comprising instructions, which, when the program is executed by the processor of the system, cause the system to carry out the method acts of the method of determining the wall thickness reduction, %WR.

This embodiment may have the effects and advantages in line with those previously described in connection with the method of determining the wall thickness reduction, %WR and the system, therefore.

An object of the invention may be achieved by computer-readable media comprising instructions which, when executed by the processor of the system, cause the system to carry out the method acts of the method of determining the wall thickness reduction, %WR The instructions to be carried out may be comprised in or output from the algorithms, in a computer program product comprising one or more method acts of the method of determining the wall thickness reduction, %WR.

This embodiment further supports the effects and advantages of the method and system as described above.

An object of the invention may be achieved by use of the method according to any one or more of the embodiments for determining the wall thickness reduction, %WR for diagnosing pipes fixed in pipe sheet holes by expansion, wherein the wall reduction is in the range of 2% to 15% preferably in the range of 4% to 10% and even more preferably in the range of 4% to 6%.

The optimal wall thickness reduction depends on the specific material of the pipe. Typical materials may be stainless steel or copper. However, the pipe may be made of other materials chosen in view of the specific application of the device comprising the fixed pipe sheet.

In a further aspect, the use of the method is where the expansion of the pipes fixed in the pipe sheet holes is of the type achieved from causing a tool with rollers to act on a pipe and controlling the expansion process according to a parameter of the expansion force transmitted to the tool.

### Description of the Drawing

Figure 1 illustrates one embodiment of the method.
Figure 2 illustrates another embodiment of the method.
Figure 3 illustrates one embodiment of the system.
Figure 4 illustrates one embodiment of a pipe sheet and a pipe.
Figure 5 illustrates tests performed on pipes arranged in pipe sheet holes expanded by rolling.

### Detailed Description of the Invention

| No | Item |
|---|---|
| 1 | System |
| 2 | pipe |
| 4 | pipe sheet hole |
| 6 | pipe sheet |
| 8 | longitudinal axis, pipe |
| 10 | initial inner diameter of pipe before expansion, d_i |
| 12 | outer diameter of pipe before expansion, d_o |
| 14 | inner diameter of pipe sheet hole, D_i |
| 16 | final inner diameter of the pipe after expansion, d_ia |
| 18 | points |
| 20 | wall thickness reduction, %WR |
| 30 | imaging device |
| 32 | optical axis |
| 40 | first image |
| 42 | second image |
| 100 | method |
| 102 | receiving |
| 104 | determining |
| 106 | capturing |
| 108 | determining |

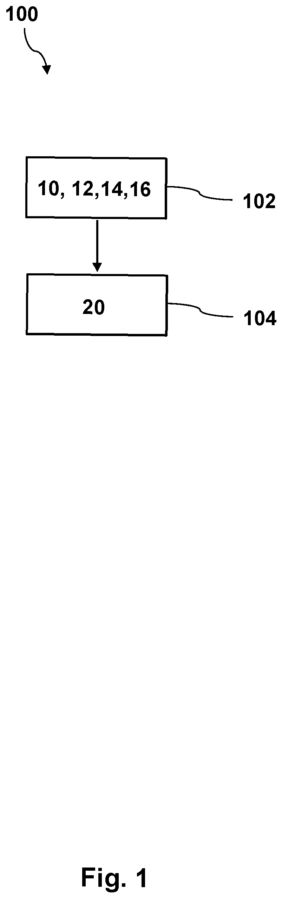

Figure 1 illustrates one embodiment of a method 100 of determining a wall thickness reduction, %WR of a pipe fixed in a pipe sheet hole by expansion.

The illustrated embodiment of the method comprises an act of receiving 102 an initial inner diameter of pipe before expansion, d_i (10), an outer diameter of pipe before expansion, d_o 12, an inner diameter of pipe sheet hole, D_i 14, and a final inner diameter of the pipe after expansion, d_ia 16. The method also includes an act of determining 104 the wall thickness reduction, %WR of the pipe based on the received diameters 10,12,14,16.

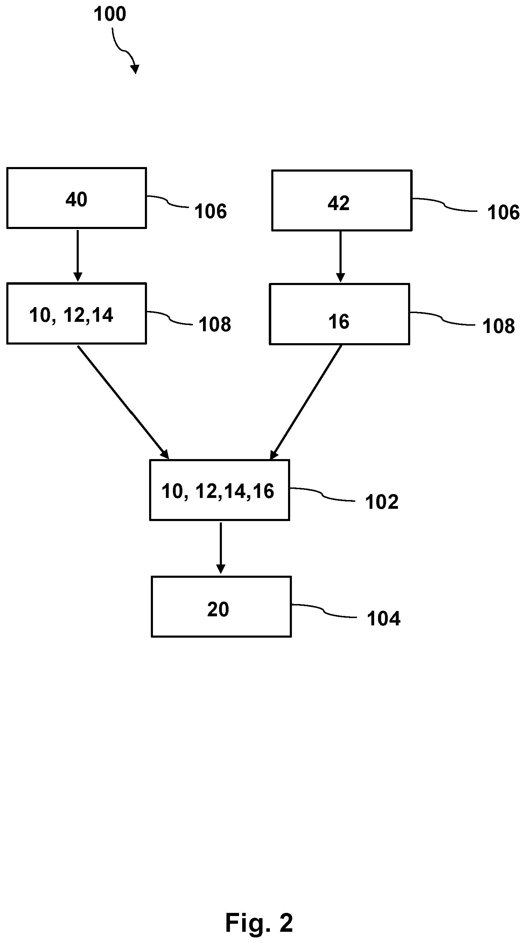

Figure 2 illustrates a further embodiment of the method 100 of determining a wall thickness reduction, %WR as illustrated in figure 1. In this embodiment, the method includes capturing 106 a first image 40 and a second image 42 of the pipe sheet with the pipe(s) inserted in the pipe sheet hole(s) before and after expansion of the pipe respectively.

From the first image 40, the diameters d_i (10), d_o (12), and D_i (14) are determined 108. From the second image 42, the diameter, d_ia (16) is determined 108.

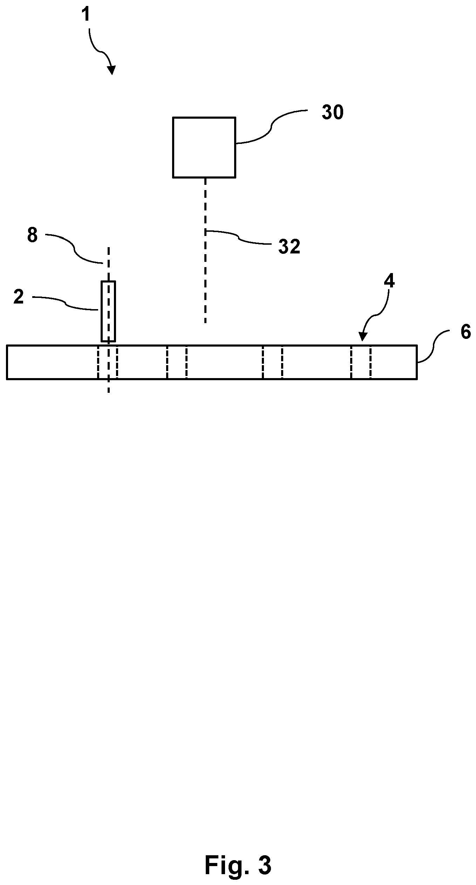

Figure 3 illustrates one embodiment of the system 1 comprising an imaging device 30 arranged externally to the pipe sheet 6 with an optical axis 32 of the imaging device 30 being aligned approximately parallel to a longitudinal axis 8 of the pipe sheet hole(s) 4.

In the embodiment a pipe 2 is illustrated to be inserted into one of the pipe sheet holes 4.

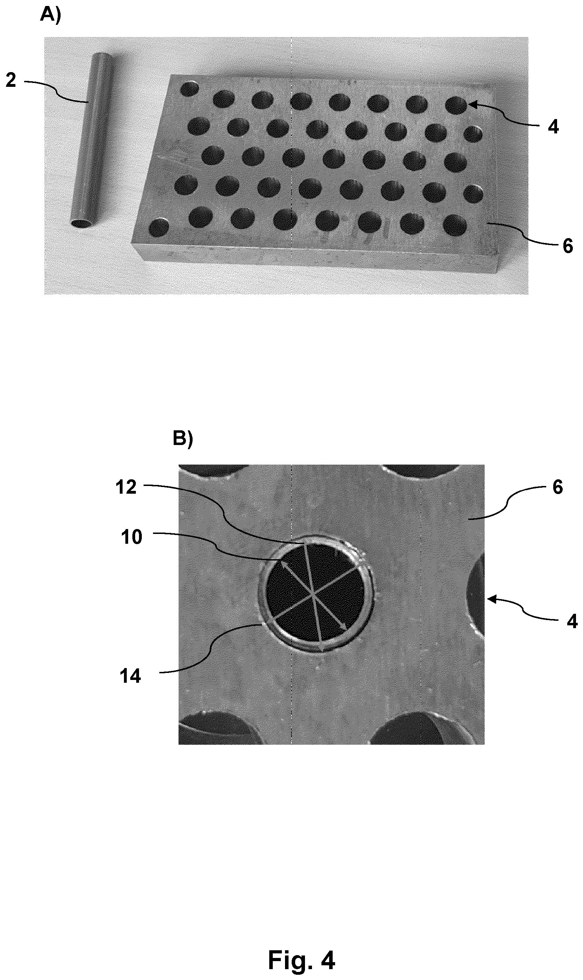

Figures 4A and 4B illustrate one embodiment of a pipe sheet 6 with pipe sheet holes 4 and a pipe 2 adapted to be inserted in the one of the pipe sheet holes 4. In figure 4A, the pipe 2 embodiment is illustrated before insertion of the pipe 2 into the hole 4. Figure 4B illustrates the embodiment with the pipe 2 inserted into the hole 4 and with the diameters d_i (10), d_o(12) and D_i(14) indicated.

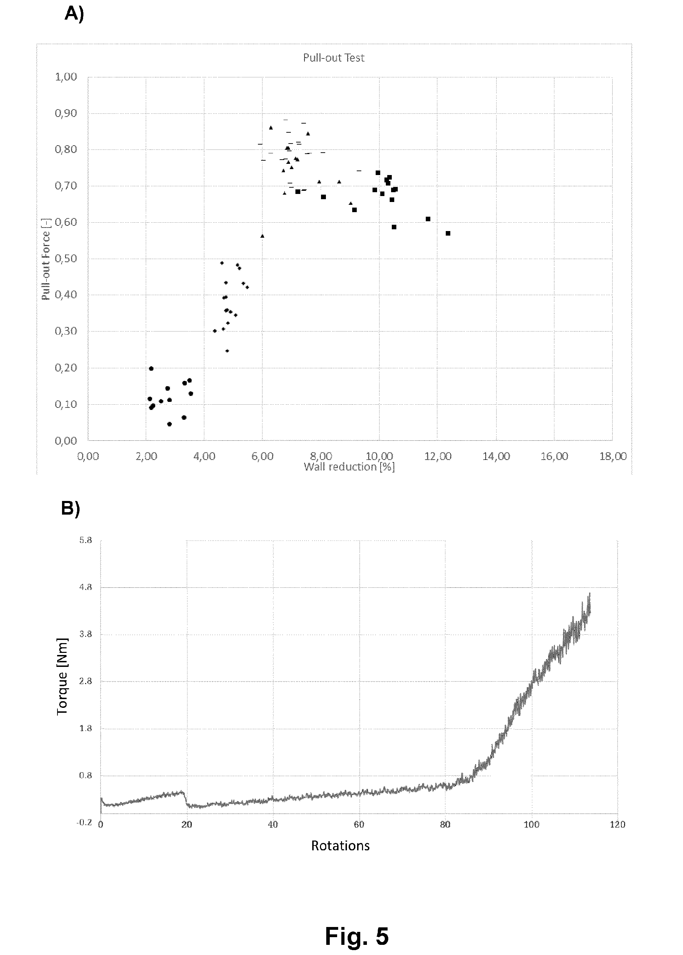

Figure 5A illustrates measured wall thickness reductions (%) versus measured maximum torque of the expansion tool used for expanding the pipe. The maximum torque is measured right before terminating the expansion process. The wall thickness reduction measurements are performed for expansion of pipes by rolling with rolling depth of 15 mm and 21 mm respectfully.

Figure 5B illustrates the torque [Nm] vs rotations of an expansion process by rolling. The part of the cure beyond ~85 illustrates the process where the pipe is being plastic deformed and the pipe sheet elastic deformed and thus the area of operation for fixing pipes in pipe sheet holes.

From figure 5A the point where also the pipe sheet is being plastic deformed can be deducted. When the deformation changes from elastic to plastic, the torque needed to further expand the pipe sheet hole is reduced, which for the performed test samples occurs somewhere between 7 to 10 %WR. The test sample pips are made of CuNi10 with Ø13 mm.

## Claims

1. Method (100) of determining a wall thickness reduction, %WR of a pipe (2) fixed in a pipe sheet hole (4) in a pipe sheet (6) by expansion, said method comprises acts of:
- using an imaging device (30) arranged externally to the pipe sheet (6) for capturing a first image (40) and a second image (42) with an optical axis (32) of the imaging device (30) being aligned approximately parallel to a longitudinal axis (8) of the pipe sheet hole (4);
- capturing (106) a first image (40) of the pipe sheet (6) with the pipe(s) (2) inserted in the pipe sheet hole(s) (4) before expansion and from the first image (40);
- determining (108):
- the initial inner diameter of pipe before expansion, d_i (10),
- the outer diameter of pipe before expansion, d_o (12), and
- the inner diameter of pipe sheet hole, D_i (14);
- capturing (106) a second image (42) of the pipe sheet (6) with the pipe(s) (2) inserted in the pipe sheet hole(s) (4) after expansion and from the second image (42);
- determining (108) the final inner diameter of the pipe after expansion, d_ia (16);
- receiving (102):
- an initial inner diameter of pipe before expansion, d_i (10),
- an outer diameter of pipe before expansion, d_o (12),
- an inner diameter of pipe sheet hole, D_i (14), and
- a final inner diameter of the pipe after expansion, d_ia (16), and
- determining (104) the wall thickness reduction, %WR (20) of the pipe (2) based on the received diameters (10,12,14,16).

2. The method (100) according to claim 1 wherein the wall thickness reduction %WR (20) of the pipe (2) after expansion is determined by: $%WR = 100 ⋅ \frac{\frac{1}{2} \left({d}_{ia}-{d}_{i}\right) - \frac{1}{2} \left({D}_{i}-{d}_{o}\right)}{\frac{1}{2} \left({d}_{o}-{d}_{i}\right)} .$

3. The method (100) according to any one of the preceding claims, wherein the received diameters (10,12,14,16) are estimated based on detection of multiple points (18) connected to the initial inner diameter of pipe before expansion (10) and/or the outer diameter of pipe before expansion (12), the inner diameter of pipe sheet hole (14), and the final inner diameter of the pipe after expansion (16), respectively.

4. The method (100) according to any one or more of the preceding claims wherein the diameters (10,12,14,16) are determined using image analysis.

5. The method (100) according to any one of claims 1 to 4, wherein the image device (30) is an optical imaging device (50), and the captured images are optical images (52).

6. System (1) for determining a wall thickness reduction, %WR of a pipe (2) fixed in a pipe sheet hole (4) by expansion, said system (1) comprising:
- an imaging device (30) configured to be arranged externally to the pipe sheet (6) with an optical axis (32) of the imaging device (30) being aligned approximately parallel to a longitudinal axis (8) of the pipe (2), and configured for capturing images,
- a processor (50) configured for receiving the captured images, for performing image analysis on the captured images for determining a diameter of an item comprised in the captured image, and for determining the wall thickness reduction, %WR (20) of the pipe (2) based on said diameters, said system being configured to execute the acts of the method (100) of any one or more of the claims 1-5 for determining the wall thickness reduction, %WR (20).

7. Computer program (60) comprising instructions, which, when the program (60) is executed by the processor (50) of the system according to claim 6, cause the system to carry out the method acts of the method (100) of any one or more of the claims 1-5.

8. Computer-readable media (62) comprising instructions which, when executed by the processor (50) of the system according to claim 6, cause the system to carry out the method acts of the method (100) of any one or more of the claims 1-5.

9. Use of the method (100) according to any one or more of claims 1-4 for diagnosing pipes (2) fixed in pipe sheet holes (4) by expansion wherein the wall reduction %WR (20) is in the range of 2% to 15% preferably in the range of 4% to 10% and even more preferably in the range of 4% to 6%.

10. The use according to claim 9 wherein the expansion of the pipes (2) fixed in the pipe sheet holes (4) is of the type achieved from causing a tool with rollers to act on a pipe and controlling the expansion process according to a parameter of the expansion force transmitted to the tool.

## Patentansprüche

1. Verfahren (100) zum Bestimmen einer Wanddickenreduktion, %WR eines in einem Rohrplattenloch (4) in einer Rohrplatte (6) durch Aufweitung fixierten Rohres (2), wobei das Verfahren die folgenden Handlungen umfasst:
- Verwenden einer Bildgebungsvorrichtung (30), die extern zu der Rohrplatte (6) zum Erfassen eines ersten Bildes (40) und eines zweiten Bildes (42) angeordnet ist, wobei eine optische Achse (32) der Bildgebungsvorrichtung (30) ungefähr parallel zu einer Längsachse (8) des Rohrplattenloches (4) ausgerichtet ist;
- Erfassen (106) eines ersten Bildes (40) der Rohrplatte (6) mit dem oder den in das oder die Rohrplattenlöcher (4) eingeführten Rohren (2) vor Aufweitung und aus dem ersten Bild (40);
- Bestimmen (108):
- des anfänglichen Innendurchmessers von Rohr vor Aufweitung, d_i (10),
- des Außendurchmessers von Rohr vor Aufweitung, d_o (12), und
- des Innendurchmessers von Rohrplattenloch, D_i (14);
- Erfassen (106) eines zweiten Bildes (42) der Rohrplatte (6) mit dem oder den in das oder die Rohrplattenlöcher (4) eingeführten Rohren (2) nach Aufweitung und aus dem zweiten Bild (42);
- Bestimmen (108) des endgültigen Innendurchmessers des Rohres nach Aufweitung, d_ia (16);
- Empfangen (102):
- eines anfänglichen Innendurchmessers von Rohr vor Aufweitung, d_i (10),
- eines Außendurchmessers von Rohr vor Aufweitung, d_o (12),
- eines Innendurchmessers von Rohrplattenloch, D_i (14), und
- eines endgültigen Innendurchmessers des Rohres nach Aufweitung, d_ia (16), und
- Bestimmen (104) der Wanddickenreduktion, %WR (20) des Rohres (2) basierend auf den empfangenen Durchmessern (10,12,14,16).

2. Verfahren (100) nach Anspruch 1, wobei die Wanddickenreduktion %WR (20) des Rohres (2) nach Aufweitung durch Folgendes bestimmt wird: $%WR = 100 ⋅ \frac{\frac{1}{2} \left({d}_{ia}-{d}_{i}\right) - \frac{1}{2} \left({D}_{i}-{d}_{o}\right)}{\frac{1}{2} \left({d}_{o}-{d}_{i}\right)} .$

3. Verfahren (100) nach einem der vorhergehenden Ansprüche, wobei die empfangenen Durchmesser (10,12,14,16) basierend auf Detektion von mehreren Punkten (18) geschätzt werden, die mit dem anfänglichen Innendurchmesser von Rohr vor Aufweitung (10) und/oder dem Außendurchmesser von Rohr vor Aufweitung (12), dem Innendurchmesser von Rohrplattenloch (14) bzw. dem endgültigen Innendurchmesser des Rohres nach Aufweitung (16) verbunden sind.

4. Verfahren (100) nach einem oder mehreren der vorhergehenden Ansprüche, wobei die Durchmesser (10,12,14,16) unter Verwenden von Bildanalyse bestimmt werden.

5. Verfahren (100) nach einem der Ansprüche 1 bis 4, wobei die Bildvorrichtung (30) eine optische Bildgebungsvorrichtung (50) ist, und die erfassten Bilder optische Bilder (52) sind.

6. System (1) zum Bestimmen einer Wanddickenreduktion, %WR eines in einem Rohrplattenloch (4) durch Aufweitung fixierten Rohres (2), wobei das System (1) umfasst:
- eine Bildgebungsvorrichtung (30), die konfiguriert ist, um extern zu der Rohrplatte (6) angeordnet zu sein, wobei eine optische Achse (32) der Bildgebungsvorrichtung (30) ungefähr parallel zu einer Längsachse (8) des Rohres (2) ausgerichtet ist, und konfiguriert zum Erfassen von Bildern,
- einen Prozessor (50), der konfiguriert ist zum Empfangen der erfassten Bilder, zum Durchführen von Bildanalyse an den erfassten Bildern zum Bestimmen eines Durchmessers eines in dem erfassten Bild umfassten Elements, und zum Bestimmen der Wanddickenreduktion, %WR (20) des Rohres (2) basierend auf den Durchmessern, wobei das System konfiguriert ist, um die Handlungen des Verfahrens (100) nach einem oder mehreren der Ansprüche 1-5 zum Bestimmen der Wanddickenreduktion, %WR (20) auszuführen.

7. Computerprogramm (60), umfassend Anweisungen, die, wenn das Programm (60) durch den Prozessor (50) des Systems nach Anspruch 6 ausgeführt wird, das System veranlassen, die Verfahrenshandlungen des Verfahrens (100) nach einem oder mehreren der Ansprüche 1-5 auszuführen.

8. Computerlesbare Medien (62), umfassend Anweisungen, die, wenn sie durch den Prozessor (50) des Systems nach Anspruch 6 ausgeführt werden, das System veranlassen, die Verfahrenshandlungen des Verfahrens (100) nach einem oder mehreren der Ansprüche 1-5 auszuführen.

9. Verwendung des Verfahrens (100) nach einem oder mehreren der Ansprüche 1-4 zum Diagnostizieren von in Rohrplattenlöchern (4) durch Aufweitung fixierten Rohren (2), wobei die Wandreduktion %WR (20) in dem Bereich von 2 % bis 15 % vorzugsweise in dem Bereich von 4 % bis 10 % und noch bevorzugter in dem Bereich von 4 % bis 6 % liegt.

10. Verwendung nach Anspruch 9, wobei die Aufweitung der in den Rohrplattenlöchern (4) fixierten Rohre (2) von der Art ist, die erzielt wird aus Veranlassen, dass ein Werkzeug mit Rollen auf ein Rohr einwirkt, und Steuern des Aufweitungsprozesses gemäß einem Parameter der auf das Werkzeug übertragenen Aufweitungskraft.

## Revendications

1. Procédé (100) de détermination d'une réduction d'épaisseur de paroi, %WR, d'un tuyau (2) fixé dans un trou de plaque de tuyau (4) dans une plaque de tuyau (6) par expansion, ledit procédé comprenant les étapes consistant à :
- utiliser un dispositif d'imagerie (30) agencé à l'extérieur de la plaque de tuyau (6) pour capturer une première image (40) et une seconde image (42), un axe optique (32) du dispositif d'imagerie (30) étant aligné approximativement parallèlement à un axe longitudinal (8) du trou de plaque de tuyau (4) ;
- capturer (106) une première image (40) de la plaque de tuyau (6), le(s) tuyau(x) (2) étant inséré(s) dans le(s) trou(s) de plaque de tuyau (4) avant l'expansion et à partir de la première image (40) ;
- déterminer (108) :
- le diamètre interne initial du tuyau avant l'expansion, d_i (10),
- le diamètre externe du tuyau avant l'expansion, d_o (12), et
- le diamètre interne du trou de plaque de tuyau, D_i (14) ;
- capturer (106) une seconde image (42) de la plaque de tuyau (6), le(s) tuyau(x) (2) étant inséré(s) dans le(s) trou(s) de plaque de tuyau (4) après l'expansion et à partir de la seconde image (42) ;
- déterminer (108) le diamètre interne final du tuyau après l'expansion, d_ia (16) ;
- recevoir (102) :
- un diamètre interne initial du tuyau avant l'expansion, d_i (10),
- un diamètre externe du tuyau avant l'expansion, d_o (12),
- un diamètre interne du trou de plaque de tuyau, D_i (14), et
- un diamètre interne final du tuyau après l'expansion, d_ia (16), et
- déterminer (104) la réduction d'épaisseur de paroi, %WR (20) du tuyau (2) sur la base des diamètres (10,12,14,16) reçus.

2. Procédé (100) selon la revendication 1 dans lequel la réduction d'épaisseur de paroi %WR (20) du tuyau (2) après l'expansion est déterminée par : $%WR = 100 ⋅ \frac{\frac{1}{2} \left({d}_{ia}-{d}_{i}\right) - \frac{1}{2} \left({D}_{i}-{d}_{o}\right)}{\frac{1}{2} \left({d}_{o}-{d}_{i}\right)} .$

3. Procédé (100) selon l'une quelconque des revendications précédentes, dans lequel les diamètres (10,12,14,16) reçus sont estimés sur la base de la détection de plusieurs points (18) associés respectivement au diamètre interne initial du tuyau avant l'expansion (10) et/ou au diamètre externe du tuyau avant l'expansion (12), au diamètre interne du trou de plaque de tuyau (14) et au diamètre interne final du tuyau après l'expansion (16).

4. Procédé (100) selon l'une quelconque ou plusieurs des revendications précédentes dans lequel les diamètres (10,12,14,16) sont déterminés par analyse d'image.

5. Procédé (100) selon l'une quelconque des revendications 1 à 4, dans lequel le dispositif d'image (30) est un dispositif d'imagerie optique (50), et les images capturées sont des images optiques (52).

6. Système (1) permettant de déterminer une réduction d'épaisseur de paroi, %WR, d'un tuyau (2) fixé dans un trou de plaque de tuyau (4) par expansion, ledit système (1) comprenant :
- un dispositif d'imagerie (30) configuré pour être agencé à l'extérieur de la plaque de tuyau (6), un axe optique (32) du dispositif d'imagerie (30) étant aligné approximativement parallèlement à un axe longitudinal (8) du tuyau (2), et configuré pour capturer des images,
- un processeur (50) configuré pour recevoir les images capturées, pour effectuer une analyse d'image sur les images capturées afin de déterminer un diamètre d'un élément compris dans l'image capturée, et pour déterminer la réduction d'épaisseur de paroi, %WR (20) du tuyau (2) sur la base desdits diamètres, ledit système étant configuré pour exécuter les étapes du procédé (100) selon l'une quelconque ou plusieurs des revendications 1 à 5 pour déterminer la réduction d'épaisseur de paroi, %WR (20).

7. Programme informatique (60) comprenant des instructions qui, lorsque le programme (60) est exécuté par le processeur (50) du système selon la revendication 6, amènent le système à mettre en œuvre les étapes de procédé du procédé (100) selon l'une quelconque ou plusieurs des revendications 1 à 5.

8. Support lisible par ordinateur (62) comprenant des instructions qui, lorsqu'elles sont exécutées par le processeur (50) du système selon la revendication 6, amènent le système à mettre en œuvre les étapes de procédé du procédé (100) selon l'une quelconque ou plusieurs des revendications 1 à 5.

9. Utilisation du procédé (100) selon l'une quelconque ou plusieurs des revendications 1 à 4 pour diagnostiquer des tuyaux (2) fixés dans des trous de plaque de tuyau (4) par expansion, dans laquelle la réduction de paroi %WR (20) est comprise dans la plage allant de 2 % à 15 %, de préférence dans la plage allant de 4 % à 10 %, et encore plus préférablement dans la plage allant de 4 % à 6 %.

10. Utilisation selon la revendication 9 dans laquelle l'expansion des tuyaux (2) fixés dans les trous de plaque de tuyau (4) est du type obtenu en amènent un outil avec des rouleaux à agir sur un tuyau et en régulant le processus d'expansion en fonction d'un paramètre de la force d'expansion transmise à l'outil.
